# EUROPEAN PATENT SPECIFICATION

(11) **EP 2 334 450 B1**
(45) Date of publication and mention of the grant of the patent: **22.08.2012**
(21) Application number: 08876075.6
(22) Date of filing: 17.10.2008
(51) Int. Cl.: B21D 5/02, B30B 1/18, F16H 25/20

(54) **AN ELECTROMECHANICAL ACTUATOR FOR PRESS BRAKES**
ELEKTROMECHANISCHER AKTOR FÜR ABKANTPRESSEN
ACTIONNEUR ELECTROMECANIQUE POUR PRESSES-PLIEUSES

(43) Date of publication of application: 22.06.2011
(73) Proprietor: Umbra Cuscinetti S.p.A., 06034 Foligno (PG) (IT)
(72) Inventor: SPEZIALI, Stefano, I-06034 Foligno (PG) (IT); BOSI, Massimiliano, I-06034 Foligno (PG) (IT); PIZZONI, Luciano, I-06034 Foligno (PG) (IT); PERNI, Federico, I-06039 Manciano (PG) (IT)
(74) Representative: Lanzoni, Luciano
(86) International application number: PCT/IT2008/000651
(87) International publication number: WO 2010/044114

(56) References cited:
- JP-A- 11 207 560
- JP-A- 2000 170 865
- JP-A- 2000 317 689

## Description

### Technical Field

The present invention relates to an electromechanical actuator for press brakes.

### Background Art

Press brakes have a bending tool, supported by the stem of a respective linear actuator which actuates the tool towards a body to be bent. For example, in press brakes for metallic plates, ball screw linear electromechanical actuators are used, able to actuate the tool towards the plate to be bent.

Said actuators are constituted by a tubular body, known in the specific technical field as lead nut, set in rotation around its own longitudinal axis by an electric motor. Within the lead nut is coaxially mounted the stem, screw-shaped and integrally coupled with the bending tool.

The lead nut has on its own inner surface appropriate seats for a plurality of balls able to rotate on themselves and to slide in the throat of the screw thread. The rotation of the lead nut determines, through the coupling achieved by the balls, the sliding of the screw within the lead nut along its own longitudinal axis and the consequent movement of the bending tool towards the body to be machined.

The actuator also comprises an external containment body, able to contain the actuating set constituted by electric motor, lead nut and stem. Said containment body is integrally engaged to the frame of the press brake by means of appropriate attachment flanges and it is appropriately sized to withstand the loads applied by the actuator.

It should be noted that the axial loads applied on the stem pass through the sphere, traverse the lead nut, the bearings, and are discharged on the outer body. In the particular case of actuators used in press brakes for bending metal plates, axial loads are particularly high, given the axial force exerted on the plate to be bent.

For this reason, the outer body must have a particularly large section, and it must be made of a material with high mechanical strength characteristics, or the body may be broken and damaged.

Therefore, the entire actuator is particularly heavy and large with the consequent over-dimensioning of the entire press brake.

Disadvantageously, the use of materials with high outer body strength also determines a particularly high production cost of the entire actuator.

Document JP 2000 170 865 A, which is considered as being the closest prior art, discloses all the features of the preamble of claim 1.

### Disclosure of Invention

An object of the present invention is to solve the problems encountered in the prior art, proposing an electromechanical actuator, in particular for press brakes, that is able to overcome the aforementioned drawbacks.

In particular, an object of the present invention is to provide an electromechanical actuator that is able to withstand the high axial loads applied to the stem and transferred to the outer body.

Another object of the present invention is to propose an economical, structurally simple electromechanical actuator, with reduced size and weight.

These objects and others as well, which shall become more readily apparent in the course of the following description, are substantially achieved by an electromechanical actuator for press brakes comprising the characteristics expressed in one or more of the appended claims.

### Description of the Drawings

Further characteristics and advantages shall become more readily apparent from the detailed description of a preferred, but not exclusive, embodiment of an electromechanical actuator for press brakes in accordance with the present invention. Said description shall be provided below with reference to the accompanying figures, provided purely by way of non limiting indication, in which:
- figure 1 shows a cross section view of an electromechanical actuator for press brakes; and
figure 2 shows an enlarged view of a construction detail of figure 1.

### Description of the Illustrative Embodiment

With reference to the accompanying figures, the reference number 1 designates in its entirety an electromechanical actuator according to the present invention. The actuator 1 finds particular application in press brakes for bending metal plates, not shown and described in detail because they are known and are not a part of the present invention.

However, it should be specified that the actuator 1 can be used in any other technical sector according to the various application needs.

In the embodiment example represented herein, the actuator 1 comprises a stem 2, able to be associated at a respective lower end 2a to a bending tool (not shown in the accompanying figures) adapted to bending processes to be effected on metal plates.

The stem 2 has substantially cylindrical shape and it is provided with an active portion 3 positioned at an upper end 2b of the stem 2.

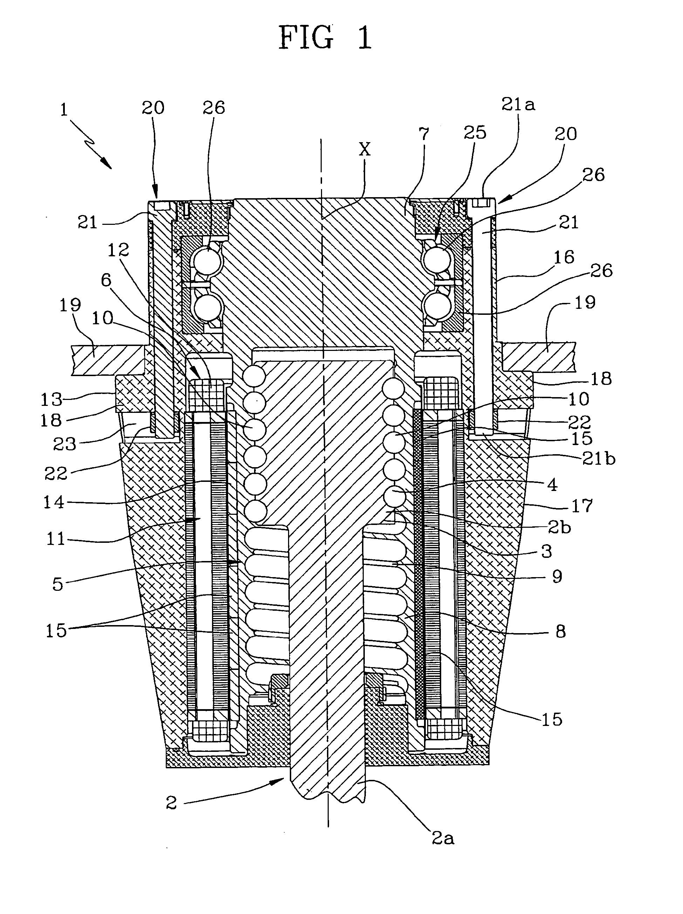

On the active portion 3 is obtained a thread 4, operatively associated to the interior of a lead nut 5 that is set in rotation around its own longitudinal axis X by motor means 6, of a known type and therefore illustrated only schematically in figure 1.

In greater detail, the lead nut 5 has substantially cylindrical shape, internally hollow, and it is defined by a head portion 7 and by a tubular portion 8.

The tubular portion 8 has a threaded inner surface 9 able to co-operate with the thread 4 of the stem 2 to actuated the stem 2 axially along the axis X during the rotation of the lead nut 5.

In particular, it should be noted that between the thread of the stem 2 and the threaded surface 9 of the lead nut 5 a plurality of movable balls 10 develops. Advantageously, the actuator 1 has means for recirculating the plurality of balls 10, preferably obtained on the active portion 3 of the stem 2 and not shown because it is known in itself.

The motor means 6 comprise at least one electric motor 11 presenting a stator 12 engaged internally to an outer containment body 13 (better described in the remainder of the present description), and a rotor 14 engaged to the aforementioned lead nut 5.

Advantageously, the stator 12 develops coaxially around the tubular portion 8 of the lead nut 5, whilst the rotor 14 is obtained directly on the lead nut 5. In this way, the rotor 14 actuates the lead nut 5 directly, determining a structurally simple and compact configuration of the entire motor 11.

In greater detail, the rotor 14 is constituted by a plurality of permanent magnets 15 placed close to each other and associated on the tubular portion 8 of the lead nut 5.

The lead nut 5, the stem 2 and the respective motor means 6 are housed within the aforementioned outer containment body 13, which has substantially tubular conformation.

In particular, the outer body 13 is obtained by aluminium casting and it is defined by a terminal portion 16 and by a containment portion 17 adjacent to the terminal portion 16.

More in particular, the terminal portion 16 is positioned superiorly and it develops coaxially around the aforementioned head portion 7 of the lead nut 5. The containment portion 17 develops instead around the tubular portion 8 of the lead nut 5 and of the respective electric motor 11, to support the stator 12 of the motor 11.

It should also be noted that the terminal portion 16 has substantially annular conformation and it has a junction portion 18, preferably obtained in a single piece with the terminal portion 16, and emerging externally from the outer body 13.

As shown only schematically in figure 1, the junction portion 18 is mounted on a flange 19 of the respective press brake by means of appropriate connection members, not described and illustrated herein.

In this way, the flange 19 sustains the entire actuator 1 by means of the engagement with the junction portion 18.

The actuator 1 at least comprises at least one tie rod 20 constrained within the containment body 13 to absorb the axial loads "C" applied on the stem 2.

In greater detail, the actuator 1 has a plurality of tie rods 20, each of which is constituted by a screw 21 made of high strength steel. It is important to stress that the screw 21, made of steel, is much more resistant to mechanical stresses due to the aforementioned axial loads "C" than the entire outer body 13. As described above, the body 13 is made of aluminium and it therefore its mechanical strength characteristics are far interior to those of steel.

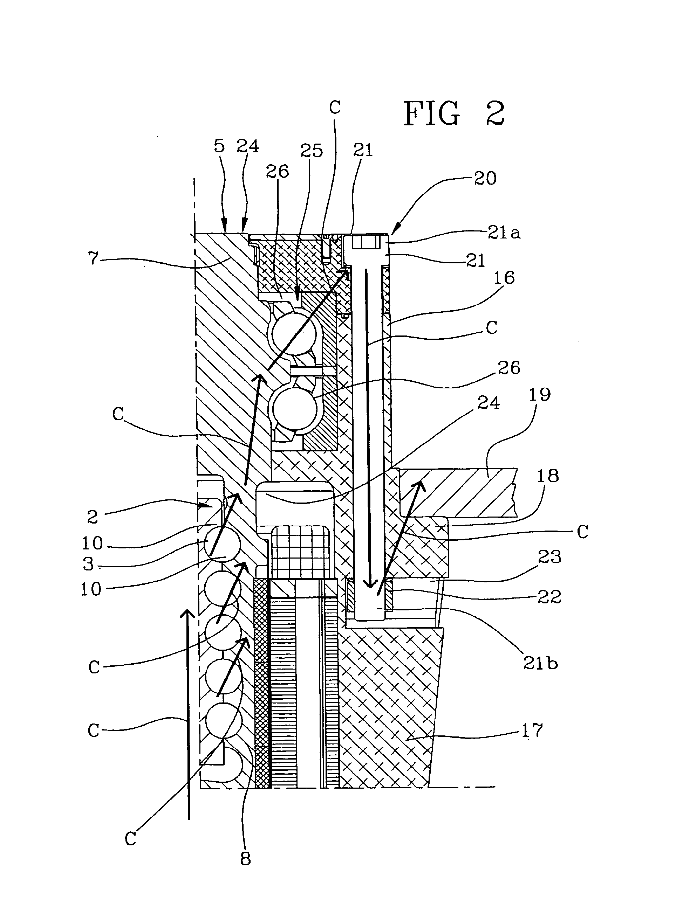

It should be noted, moreover, that the screws 21 are screwed in the terminal portion 16 of the outer body 13 in such a way as to transfer the aforementioned axial loads "C" directly to the junction portion 18 and to the flange 19 (see figure 2 in which the path of the axial loads "C" is indicated).

Additionally, the tie rods 20 are screwed to respective nuts 22 opportunely housed in seats 23 obtained on the body 13 between the terminal portion 16 and the containment portion 17. In this situation, it should be noted that each screw 21 develops along the entire terminal portion 16 compressing it along a respective direction parallel to the axis "X".

The screws 21 screwed to the respective nuts 22 therefore work by traction and are loaded according to their screwing on the nuts 22. Consequently, the traction work of the screws offsets the stresses given by the aforementioned loads "C" and transferred on the body 13. Advantageously, the loads "C" passing on the tie rods 20 do not involve the body 13, preventing it from being stressed.

With particular reference to figure 2, it should be noted that the loads "C" are transferred to the tie rods by means 24 for transferring the loads "C" from the stem 2 to the tie rods 20.

In particular, the transfer means 24 of the loads "C" comprise means 25 for reducing friction interposed between the lead nut 5 and the terminal portion 16 of the outer body 13.

The friction-reducing means 25 comprise at least one bearing 26 which can be a ball bearing, a roller bearing, a taper roller bearing or a barrel roller bearing. Advantageously, there are two ball bearings 26, interposed between the head portion 7 and the terminal portion 16 to enable the rotation of the lead nut 5 relative to the body 13.

It should be noted that at least one bearing 26 has an axis of rotation of the respective ball transverse to the axis of rotation "X" and coinciding with a direction of transfer of the loads "C" from the lead nut 5 to the tie rod 20. This arrangement of the bearing 26 enables to transfer the loads "C" through the bearing 26 itself, directly from the head portion 7 to an upper end 21a of the screw 21 opposite to a lower end 21 b screwed to the nut 22.

The transfer means 24 are also constituted by the head portion 7 of the lead nut 5, by the balls 10, and by the active portion 3 of the stem 2. In this way, following the arrows in figure 2, the loads "C" follow a path defined by the stem 2, through the balls 10 towards the head portion 7 of the lead nut 10.

It should be noted that these elements are made of a particularly strong material and therefore they do not undergo any damage due to the forces at play and transferred by the axial loads "C".

At this point, the loads "C" are transferred to the screw 21 by means of the aforementioned bearings 26.

Consequently, the path defined by the means 25 imposes the passage of the loads "C" through the tie rods 20 from the upper end 21 a of the screw 21 to the lower end 21 b.

The invention achieves important advantages.

First of all, the actuator according to the present invention assures a resistance to the axial loads "C" given by the presence of the screws 21 that work by traction and by the transfer means 24 that address the loads "C" themselves towards the tie rods 20.

Advantageously, the body 13 is not subjected to load and the screws 21 discharge the loads "C" directly towards the flange 19 of the press brake. Therefore, a body 13 can be obtained with low-cost material and particularly small dimensions with the consequent advantages in terms of overall size, weight and manufacturing costs of the entire actuator 1.

Lastly, the actuator according to the present invention is structurally simple and reliable.

## Claims

1. An electromechanical actuator for press brakes, comprising:
an outer containment body (13);
a lead nut (5) positioned inside the outer body (13) and having a threaded inner surface (9);
a stem (2) able to be associated with a bending tool and having a thread (4) operatively associated internally to said lead nut (5); and
motor means (6) positioned in said outer body (13) to set in rotation the lead nut (5) around its own longitudinal axis (X), said rotation of the lead nut (5) determining the axial displacement of the stem (2);
at least one tie rod (20) fastened within said containment body (13) to absorb the axial loads (C) applied on the stem (2) and means (24) for transferring the axial loads (C) from the stem (2) to said tie rod (20);
**characterised in that** said tie rod (20) is positioned at a junction portion (18) of the outer body (13) able to be associated to a support flange (19) of a press brake, to transfer the loads (c) directly to said junction portion (18) and to said flange (19); said tie rod (20), inserted in a terminal portion (16) of the outer body (13) associated and proximate to the junction portion (18), being screwed to a nut (22) to work by traction and to load by compression said terminal portion (16) of the outer body (13).

2. Actuator as claimed in claim 1, **characterised in that** said tie rod (20) comprises a screw (21) inserted in said outer body (13) and made of high strength steel.

3. Actuator as claimed in claim 1, **characterised in that** means (24) for transferring the loads (C) comprise means (25) for reducing friction interposed between the lead nut (5) and the terminal portion (16) of said outer body (13).

4. Actuator as claimed in the previous claim, **characterised in that** said means (25) for reducing friction have at least one ball bearing (26) having an axis of rotation transverse to the axis of rotation (X) of the lead nut (5) and coinciding to a direction of transfer of the loads (C) from the lead nut (5) to said tie rod (20).

5. Actuator as claimed in the previous claim, **characterised in that** said means (24) for transferring the loads (C) further comprise a head portion (7) of the lead nut (5) interposed between said ball bearing (26) and a tubular portion (8) of the lead nut (5) presenting said threaded surface (9).

6. Actuator as claimed in the previous claim, **characterised in that** said means (24) for transferring the loads (C) further comprise a plurality of balls (10) movable between the thread (4) of the stem (2) and the threaded surface (9) of the lead nut (8).

7. Actuator as claimed in the previous claim, **characterised in that** it further comprises means for re-circulating the plurality of balls (10).

8. Actuator as claimed in the previous claim, **characterised in that** said means (24) for transferring the loads (C) further comprise an active portion (3) of the stem (2) positioned at the opposite side from the bending tool and presenting said thread (4); said re-circulation means being obtained in said active portion (3) of the stem (2).

9. Actuator as claimed in any of the previous claims, **characterised in that** said motor means (6) comprise at least one electric motor (11) having a stator (12) engaged internally to said body (13) and a rotor (14) engaged to said lead nut (5).

10. Actuator as claimed in the previous claim **characterised in that** said rotor (14) is obtained directly on the lead nut (5).

11. Actuator as claimed in claim 12 when it depends on any of the claims 8 to 11, **characterised in that** said rotor (14) comprises a plurality of permanent magnets (15) associated on the tubular portion (8) of the lead nut (5).

## Patentansprüche

1. Elektromechanischer Aktor für Abkantpressen, umfassend:
einen äußeren Gehäusekörper (13);
eine Leitspindel (5), positioniert im äußeren Körper (13) und aufweisend eine Innenfläche mit Gewinde (9);
einen Schaft (2), der in der Lage ist, mit einem Abkantwerkzeug verbunden zu werden und der ein Gewinde (4) aufweist, das intern betriebswirksam mit der Leitspindel (5) verbunden ist; und
Motormittel (6), positioniert im äußeren Körper (13), um die Leitspindel (5) um ihre eigene Längsachse (X) in Drehung zu versetzen, wobei die Drehung der Leitspindel (5) die axiale Verschiebung des Schafts (2) bewirkt;
mindestens eine Verbindungsstange (20), befestigt im Gehäusekörper (13), um die auf den Schaft (2) wirkenden axialen Lasten (C) zu dämpfen, sowie Mittel (24) zum Übertragen der axialen Lasten (C) vom Schaft (2) auf die Verbindungsstange (20);
**dadurch gekennzeichnet, dass** diese Verbindungsstange (20) an einem Anschlussabschnitt (18) des äußeren Körpers (13) positioniert ist, in der Lage, mit einem Halteflansch (19) einer Abkantpresse verbunden zu werden, um die Lasten (C) unmittelbar auf den Anschlussabschnitt (18) und den Flansch (19) zu übertragen; wobei die Verbindungsstange (20) in einem Endabschnitt (16) des äußeren Körpers (13) eingesetzt ist, verbunden mit und in der Nähe von dem Anschlussabschnitt (18), und an einer Mutter (22) angeschraubt ist, um durch Traktion zu arbeiten und durch Kompression den Endabschnitt (16) des äußeren Körpers (13) zu belasten.

2. Aktor nach Anspruch 1, **dadurch gekennzeichnet, dass** die Verbindungsstange (20) eine Schraube (21) umfasst, die im äußeren Körper (13) eingesetzt ist und aus hochfestem Stahl besteht.

3. Aktor nach Anspruch 1, **dadurch gekennzeichnet, dass** Mittel (24) zum Übertragen der Lasten (C) Mittel (25) zum Reduzieren der Reibung umfassen, die zwischen der Leitspindel (5) und dem Endabschnitt (16) des äußeren Körpers (13) eingesetzt sind.

4. Aktor nach dem vorhergehenden Anspruch, **dadurch gekennzeichnet, dass** die Mittel (25) zum Reduzieren der Reibung mindestens ein Kugellager (26) aufweisen, das eine Rotationsachse besitzt, die transversal zur Rotationsachse (X) der Leitspindel (5) angeordnet ist und mit einer Übertragungsrichtung der Lasten (C) von der Leitspindel (5) auf die Verbindungsstange (20) übereinstimmt.

5. Aktor nach dem vorhergehenden Anspruch, **dadurch gekennzeichnet, dass** die Mittel (24) zum Übertragen der Lasten (C) zudem einen Vorderabschnitt (7) der Leitspindel (5) umfassen, eingesetzt zwischen dem Kugellager (26) und einem rohrförmigen Abschnitt (8) der Leitspindel (5), aufweisend die Gewindefläche (9).

6. Aktor nach dem vorhergehenden Anspruch, **dadurch gekennzeichnet, dass** die Mittel (24) zum Übertragen der Lasten (C) zudem eine Mehrzahl von Kugeln (10) umfassen, die zwischen dem Gewinde (4) des Schafts (2) und der Gewindefläche (9) der Leitspindel (8) bewegbar sind.

7. Aktor nach dem vorhergehenden Anspruch, **dadurch gekennzeichnet, dass** er zudem Mittel für den Umlauf der Mehrzahl von Kugeln (10) umfasst.

8. Aktor nach dem vorhergehenden Anspruch, **dadurch gekennzeichnet, dass** die Mittel (24) zum Übertragen der Lasten (C) zudem einen aktiven Abschnitt (3) des Schafts (2) umfassen, positioniert auf der entgegengesetzten Seite des Abkantwerkzeugs und aufweisend das Gewinde (4); wobei diese Umlaufmittel in diesem aktiven Abschnitt (3) des Schafts (2) ausgebildet sind.

9. Aktor nach einem der vorhergehenden Ansprüche, **dadurch gekennzeichnet, dass** die Motormittel (6) mindestens einen Elektromotor (11) mit einem Stator (12) umfassen, intern im Eingriff mit dem Körper (13), und einen Rotor (14) im Eingriff mit der Leitspindel (5).

10. Aktor nach dem vorhergehenden Anspruch, **dadurch gekennzeichnet, dass** der Rotor (14) direkt auf der Leitspindel (5) ausgebildet ist.

11. Aktor nach Anspruch 12, wenn dieser von einem der Ansprüche 8 bis 11 abhängt, **dadurch gekennzeichnet, dass** der Rotor (14) eine Mehrzahl an Permanentmagneten (15) umfasst, verbunden mit dem rohrförmigen Abschnitt (8) der Leitspindel (5).

## Revendications

1. Actionneur électromécanique pour presses-plieuses, comprenant :
un corps de confinement externe (13) ;
un écrou fileté (5) positionné à l'intérieur du corps externe (13) et présentant une surface interne filetée (9) ;
une tige (2) pouvant être associée à un outil de cintrage et présentant un filet (4) associé de façon opérationnelle à l'intérieur dudit écrou fileté (5) ; et
un moteur (6) positionné dans ledit corps externe (13) pour entraîner en rotation l'écrou fileté (5) autour de son axe longitudinal (X), ladite rotation de l'écrou fileté (5) déterminant le déplacement axial de la tige (2) ;
au moins un tirant (20) attaché à l'intérieur dudit corps de confinement (13) pour absorber les charges axiales (C) appliquées à la tige (2) et un moyen (24) pour transférer les charges axiales (C) de la tige (2) audit tirant (20) ;
**caractérisé en ce que** ledit tirant (20) est positionné au niveau d'une partie de jonction (18) du corps externe (13) pouvant être associé à une bride de support (19) d'une presse-plieuse, pour transférer les charges (c) directement vers ladite partie de jonction (18) et vers ladite bride (19) ; ledit tirant (20), inséré dans une partie terminale (16) du corps externe (13) associé et proche de la partie de jonction (18), étant vissé sur un écrou (22) pour agir par traction et charger par compression ladite partie terminale (16) du corps externe (13).

2. Actionneur selon la revendication 1, **caractérisé en ce que** ledit tirant (20) comprend une vis (21) insérée dans ledit corps externe (13) et réalisé dans un acier à haute résistance.

3. Actionneur selon la revendication 1, **caractérisé en ce que** le moyen (24) pour transférer les charges (C) comprend un moyen (25) pour réduire la friction interposé entre l'écrou fileté (5) et la partie terminale (16) dudit corps externe (13).

4. Actionneur selon la revendication précédente, **caractérisé en ce que** ledit moyen (25) pour réduire la friction présente au moins un roulement à billes (26) présentant un axe de rotation transversal par rapport à l'axe de rotation (X) de l'écrou fileté (5) et coïncidant avec une direction de transfert des charges (C) de l'écrou fileté (5) audit tirant (20).

5. Actionneur selon la revendication précédente, **caractérisé en ce que** le moyen (24) pour transférer les charges (C) comprend également une partie de tête (7) de l'écrou fileté (5) interposée entre ledit roulement à billes (26) et une partie tubulaire (8) de l'écrou fileté (5) présentant ladite surface filetée (9).

6. Actionneur selon la revendication précédente, **caractérisé en ce que** le moyen (24) pour transférer les charges (C) comprend également une pluralité de billes (10) pouvant être déplacées entre le filet (4) de la tige (2) et la surface filetée (9) de l'écrou fileté (8).

7. Actionneur selon la revendication précédente, **caractérisé en ce qu'**il comprend également un moyen de recirculation de la pluralité de billes (10).

8. Actionneur selon la revendication précédente, **caractérisé en ce que** le moyen (24) pour transférer les charges (C) comprend également une partie active (3) de la tige (2) positionnée du côté opposé de l'outil de cintrage et présentant ledit filet (4) ; ledit moyen de recirculation étant réalisé dans ladite partie active (3) de la tige (2).

9. Actionneur selon l'une quelconque des revendications précédentes, **caractérisé en ce que** ledit moteur (6) comprend au moins un moteur électrique (11) présentant un stator (12) engagé à l'intérieur dudit corps (13) et un rotor (14) engagé dans ledit écrou fileté (5).

10. Actionneur selon la revendication précédente, **caractérisé en ce que** ledit rotor (14) est directement obtenu sur l'écrou fileté (5).

11. Actionneur selon la revendication 12 quand elle dépend d'une quelconque des revendications 8 à 11, **caractérisé en ce que** ledit rotor (14) comprend une pluralité d'aimants permanents (15) associés sur la partie tubulaire (8) de l'écrou fileté (5).
